# EUROPEAN PATENT APPLICATION

(11) **EP 4 141 694 A1**
(43) Date of publication of application: **01.03.2023**
(21) Application number: 21193633.1
(22) Date of filing: 27.08.2021
(51) Int. Cl.: G06F 16/27, G06F 11/10

(54) **A COMPUTER IMPLEMENTED METHOD FOR DETERMINING A DATA SYNCHRONIZATION STATE BETWEEN A SOURCE DATABASE AND A TARGET DATABASE**

(71) Applicant: BASF SE, 67056 Ludwigshafen am Rhein (DE)
(72) Inventor: Gau, Sebastian, 67056 Ludwigshafen (DE)
(74) Representative: Eisenführ Speiser

(57) **Abstract**

The invention refers to a method 200 for determining a synchronization state between a source database and a target database. A data set is associated with a tag and comprises a series of data values. In a step 210 a source map being indicative of a structuring of the values stored at the source database into data frames is provided, wherein the values associated with a frame are defined by a tag associated with a data set. In a step 220 a target map for the target database is provided, wherein the target map corresponds to the source map. For the data frames a Hash value is determined in a step 230, wherein the Hash value is sensitive to the data values associated with the respective data frame, and in a step 240 the data synchronization state is determined by comparing the Hash values.

## Description

### FIELD OF THE INVENTION

The invention relates to a computer implemented method, a computational framework, a database system and a computer program product for determining a data synchronization state between a source database and a target database.

### BACKGROUND OF THE INVENTION

In modern industrial production processes, a plurality of sensors are provided that monitor the production of a product in an industrial plant. The data generated by the plurality of sensors is generally stored in form of time-series data sets in a process database system sometimes called historian of the industrial plant. Such time-series data sets are each associated with a tag which can be regarded as an identifier for the time series data set and comprises a series of time-dependent data values, for instance, measurements of one or more sensors of the industrial plant. Such time-series data sets often comprise time-dependent data values of many years during which the sensor has been measuring parameters of the industrial plant. Moreover, it is very common that the process database systems on which the time-series data sets are stored are not updated to a current technology level but are kept working on their current technology level as legacy systems. However, today it is often desirable to use the plurality of data provided within the time-series data sets in other contexts, for instance, for big data mining, or further analysis of the data in higher ranking computational systems, like an enterprise control system, etc. For this purpose, the time-series data sets are retrieved from the process database system as source database and copied to a target database, for instance, to a cloud based database system or a technologically advanced database system, which allows to access the time-series data sets for the respective desired applications. However, copying such huge amounts of data, in particular, in a continuous manner, taking into account possible restrictions of the target database system, can lead to failures in the copying procedure and thus to errors in the copied data set on the target database. On the long run, such failures and errors can lead to the source database and the target database being not synchronized. Such an unsynchronized state is of course not desired. However, simply comparing the time-dependent data sets stored on the target database and the source database one by one for determining a data synchronization state between the database systems is very ineffective or even impossible when taking into account the possible technology restrictions of the source database, for instance, due to its inferior technological level, or would have to be performed on time scales that might only be acceptable in exceptional circumstances. Thus, today a data synchronization state of respective target and source database in this context is often not known or only determined if there is actual evidence that cannot be ignored that the two databases are unsynchronized. Thus, it would be advantageous if a method were provided that would allow for a more effective and computationally inexpensive determination of a data synchronization state between a source database and a target database, in the context of time-series data sets corresponding to an industrial plant.

### SUMMARY OF THE INVENTION

It is an object of the present invention to provide a computer implemented method, a computational framework, a database system and a computer program product that allow for a more effective and computationally inexpensive determination of a data synchronization state between a process database system of an industrial plant as source database and a target database. Moreover, it is an object of the present invention to enable a continuous data synchronization state determination of such databases if the source database refers to a legacy system and the target database refers to a technologically superior system.

In a first aspect of the present invention a computer implemented method for determining a data synchronization state between a source database and a target database is presented, wherein the target database is configured to store a copy of historical time-series data sets stored at the source database of an industrial plant, wherein a respective time-series data set is associated with a respective tag and comprises a respective series of time-dependent data values, wherein the method comprises i) providing a source map for the source database, wherein the source map is indicative of a structuring of at least some of the time-dependent data values stored at the source database into a plurality of source data frames, wherein the time-dependent data values associated with a data frame are defined by a) a respective tag associated with a respective time-series data set, and b) a respective start time and a respective end time of the time-dependent data values of the respective time-series data set associated with the respective tag, ii) providing a target map for the target database, wherein the target map is indicative of a structuring of at least some of the time-dependent data values stored at the target database into a plurality of target data frames, wherein the target map corresponds to the source map such that the structuring of the target database corresponds to the structuring of the source database such that the source data frames correspond to the target data frames, respectively, iii) determining for the source data frames and for the target data frames a Hash value, wherein the Hash value is sensitive to the time-dependent data values associated with the respective data frame, and iv) determining the data synchronization state by comparing the Hash value of a target data frame with the Hash value of the corresponding source data frame.

Since the source database and the target database are structured into a plurality of source data frames and target data frames, respectively, wherein a Hash value is determined for the source data frames and the target data frames and the data synchronization state is based on comparing the Hash values, a plurality of time-dependent data values can be compared at the same time such that the determination of the data synchronization state of the source database and the target database becomes less time consuming. Moreover, since the huge amount of time-dependent data values can be compared based on relatively few Hash values, the method is computationally less expensive and more effective such that also legacy systems will not be overloaded when performing the method.

The time-series data sets stored on the source database that can be regarded as a process database system of an industrial plant, can refer to any series of time-dependent data values that are associated with the respective tag. Preferably, the respective time-series data sets comprise time-dependent data values that refer to measurements of a sensor provided in the industrial plant for monitoring a production process of the industrial plant. Accordingly, the respective time-series data sets can also be regarded as control data utilized for monitoring and controlling the industrial plant. In a preferred embodiment, the tag associated with the time-dependent data values can be indicative of an identity of the sensor of the industrial plant that has provided the respective time-dependent data values. For example, a time-series data set can refer to a time-series of temperature measurements provided by a temperature sensor in a chemical reactor during the production of a specific product. The temperature sensor can be, for instance, adapted to provide a temperature measurement every few seconds that is stored on the process database system in association with a tag indicative of the identity of the temperature sensor and thus generates a respective time-series data set. However, in other embodiments the series of time-dependent data values can also refer to data values measured not only by one sensor but by a plurality of sensors, wherein in this case the tag associated with the time-dependent data values can be indicative of the plurality of sensors or can be completely independent of the source of the time-dependent data values.

Generally, a time-series data set comprises in addition to the time-dependent data values also timestamps associated with the time-dependent data values to indicate the time at which the time-dependent data values have been measured. Moreover, optionally a time-series data set can further comprise a quality value associated with each time-dependent data value of the time-series data set, wherein the quality value can be indicative of a quality of the measurement of the respective time-dependent data value or of any event related to the measurement of the time-dependent data value. Without limiting the generality or scope of the present teachings, in an embodiment, the time-series data set can refer to an in-order insert time-series data set that is defined by the most recently inserted, i.e. stored, time-dependent data value associated with the time-series data set being the time-dependent data value associated with the most recent timestamp compared with all other timestamps associated with already stored time-dependent data values. Thus, an in-order insert time-series data set can be regarded as referring to a time-series data set in which all time-dependent data values are stored subsequently, i.e. in order of the associated timestamps. Hence, the newest time-dependent data value is stored after the latest inserted time-dependent data values associated with timestamps indicating that the measurement has been performed before the newest time-dependent data value.

The time-series data sets stored at the source database of the industrial plant are continuously, at predetermined time intervals, or at least once in a while, copied to a target database which can be, for instance, technically advanced with respect to the source database or which allows at least a further access, for instance, of technologically advanced applications, to the time-series data sets. Generally, since for the time-series data sets for which the data synchronization state is determined, the copy process is already concluded, the time-series data sets stored at the source database and the target database can be regarded as historical time-series data sets.

The method comprises providing a source map for the source database. Generally, the providing of the source map can also comprise the generation of the source map. However, the source map can also be stored on a respective storage already such that the providing can comprise retrieving the source map from the respective storage. For example, the source map can be a source map that has already been used in a previous data synchronization state determination of the source and target database. A source map is indicative of a structuring of at least some of the time-dependent data values stored at the source database into a plurality or source data frames. In particular, the structuring refers to an association of the time-dependent data values stored on the source database with a respective source data frame. The time-dependent data values associated with the data frame are defined by a) a respective tag associated with the respective time-series data set and b) a respective start time and a respective end time at the time-dependent data values of the respective time-series data set associated with the respective tag.

Further, the method comprises providing a target map for the target database. Generally, also in this case, the providing of the target map can also comprise the generation of the target map. However, the target map can also be stored on a respective storage already such that the providing can comprise retrieving the target map from the respective storage. For example, the target map can be a target map that has already been used in a previous data synchronization state determination of the source and target database. Also the target map is indicative of a structuring of at least some of the time-dependent data values stored at the target database into a plurality of target data frames. Generally, if in the following the term "data frame" is used without a previous "target" or "source", the respective statement is applicable to both the target data frames and the source data frames.

The structuring can be regarded as an association of the time-dependent data values with the respective target data frames. Generally, a data frame indicated by a target map or a source map is defined by the time-dependent data values associated with the respective data frame, wherein the respective time-dependent data values are in turn defined by the time-dependent data set, i.e. the tag, to which they belong and further by the timestamp associated by the time-dependent data values, wherein the timestamps can be indicated by respective start times and respective end times. Hence, data frames, like the target data frames and the source data frames, can be regarded as a grouping of specific time-dependent data values under a same identity, i.e. a respective data frame. The source map and the target map refer then to any kind of data structure that allows to identify the time-dependent data values that are associated with a respective data frame. For example, the source map or target map can refer to a list or table that lists all time-dependent data values that refer to a respective data frame. However, the source map or the target map can also refer to more abstract data structures, for instance, that define the boundaries of a data frame in an abstract data coordinate system in which the time-dependent data values can be regarded as being positioned, for instance, based on their timestamp and the respective associated tag. The providing of the source map and the target map can also be regarded as a providing of the source and target data frames.

Generally, the target map corresponds to the source map. In particular, a target map corresponds to a source map when the structuring of the target database corresponds to the structuring of the source database such that the source data frames correspond to the target data frames, respectively. In an embodiment, the structuring of the target database corresponds to the structuring of the source database when in a synchronized state each target data frame is defined by the same time-series data values as the corresponding source data frame, respectively.

In an embodiment, it is preferred that the source and the target map and hence the respective data frames are optimized with respect to a retrieval of the time-dependent data values of a respective data frame from the source and/or target database. In particular, if the source database refers to a legacy system, it is preferred that the size of a respective data frame, i.e. amount of data associated with the data frame, takes the computational restrictions of the legacy source database into account. For example, the source and target map can be generated based on a known source database data retrieval resource consumption and speed. Additionally or alternatively, a data density, i.e. amount of time dependent-data values stored per unit time, of a respective time-dependent data set can be taken into account when generating the source and target maps. In a preferred embodiment, the optimizing with respect to a retrieval of the time-dependent data values of a respective data frame from the source and/or target database comprises performing test data extractions referring to extracting a predetermined amount of arbitrary data from the source and/or target database, wherein based on the test data extractions a responsiveness and data density of the respective database can be determined. The optimization can then be performed by solving a respective optimization problem with respect to predetermined boundary conditions. The boundary conditions refer, preferably, to a minimum and maximum number of data points per data frame and/or to a maximum number of tags per data frame. For example, the number of data points per data frame can be set to lie between 50,000 and 5,000,000 data point per data frame and the maximum number of tags can be set to 3,000. Generally, these boundary conditions can be determined heuristically, in particular, based on experience with the respective database systems. The source and target map can then be determined by solving the optimization problem with respect to these boundary conditions. Moreover, it is preferred that, if during the processing of the method a failure occurs, for example, due to an overloading of one of the databases, the respective optimization is revised by amending the respective boundary conditions. The revising can be performed until an accuracy criterion is met, for instance, until the number of failed requests per time falls below a predetermined threshold. The individual boundary conditions found in this way for a respective database can then be stored and utilized in all further optimizations for determining the source and target maps.

Further, the method comprises determining for the source data frames and for the target data frames a Hash value. In particular, it is preferred that for each source data frame and for each target data frame defined by the source map and the target map, respectively, a Hash value is determined. However, in some embodiments it may be technically sensible to determine Hash values only for some of the source data frames and target data frames, for instance, in cases in which only for a part of the source database and the target database a data synchronization state shall be determined. In this case, the Hash value is determined for corresponding source data frames and target data frames.

Generally, a Hash value refers to a value returned by applying a Hash function to data values. A Hash function has the characteristic to map data values of arbitrary size to data values of a fixed size. Preferably, the Hash value is determined based on a predefined Hash function. In particular, the Hash value is determined such that it is sensitive to the time-dependent data values associated with the respective data frame. Accordingly, the Hash value is indicative of the time-dependent data values associated with the respective data frame. Preferably, the utilized Hash function maps the time-dependent data values associated with the respective data frame to only one Hash value. However, the Hash function can also be adapted to map the time-dependent data values of a respective data frame to more than one Hash value, preferably, to less Hash values than time-dependent data values associated with the data frame. Since the source and the target map define the respective target and source data frame, it is preferred that the target and source data map are utilized for identifying the time-dependent data values of a respective data frame on the respective database for determining the Hash value. However, in other embodiments, the data frames defined by the source and target data map can also be already retrieved from the respective database and, for instance, be temporarily stored on a temporal storage, before being provided for determining the Hash value.

In a preferred embodiment, the Hash value refers to an overall Hash value and is determined based on individual Hash values determined for each respective time-dependent data value of a data frame. In particular, for mapping the time-dependent data values of a data frame to a Hash value, a first Hash function can be utilized. In particular, it is preferred that an individual Hash value is determined based on a time, value and/or quality associated with the time-dependent data value. For example, the time associated with the time-dependent data value can refer to the timestamp associated with the time-dependent data value. The quality can refer to the quality value that is optionally also associated with the time-dependent data value. And the term "value" refers in this case to the value of the time-dependent data value itself. The overall Hash value can then be determined based on the individual Hash values by again utilizing, for instance, a second Hash function that maps the individual Hash values to the overall Hash value. However, in a preferred embodiment, the overall Hash value is determined based on the individual Hash values by utilizing a Merkle tree.

The method then comprises determining the data synchronization state by comparing the Hash value of a target data frame with the Hash value of the corresponding source data frame. If the Hash value refers to an overall Hash value, the data synchronization state is determined by comparing an overall Hash value of a target data frame with an overall Hash value of the corresponding source data frame. In particular, the comparing comprises determining whether the Hash value of the target data frame and the Hash value of the corresponding source data frame is the same or not. Since the Hash values of a data frame are indicative of the time-dependent data values associated with the respective data frame, equal Hash values for a target data frame and a source data frame are a direct indicator that all time-dependent data values associated with the respective data frames are also the same, i.e. synchronized. Differing Hash values are on the other hand then a direct indicator that the time-dependent data values of the target data frame and the corresponding source data frame are not synchronized, for instance, that one or more time-dependent data values are missing on the target database or that wrong values of the time-dependent data values have been copied to the target database.

The data synchronization state can then be determined based on the result of all comparisons performed so far. The data synchronization state may then refer to a simple statement that the data of the target database and the source database is synchronized or not synchronized. However, the data synchronization state can also be determined such that it is indicative of the level of the synchronization, if any, of the source database and the target database. For instance, based on the number of data frames for which a differing Hash value has been determined, a respective level of the synchronization can be provided. Moreover, the data synchronization state can be simply regarded as an internal value or information that is utilized for further processing. For example, based on whether one or more of the data frames are synchronized, further processes can be started. The data synchronization state can thus be, for instance, provided to a user or can be utilized as internal information that is not directly accessible by a user.

In an embodiment, a data frame is associated with time-dependent data values of different respective time-series data sets defined by a) different respective tags and b) the same respective start time and respective end time. In particular, it is preferred that the different respective tags associated with the data frame refer to subsequent tags. Accordingly, in this case a data frame can be defined in a data space spanned in one dimension by the tags and in another dimension by the timeline of the time-series data sets, by defining the tag range and the time range of the respective data frame. Then, all time-dependent data values falling within the defined tag range and time range are associated with the respective data frame.

In an embodiment, if during the determining of the data synchronization state, it is determined that at least one Hash value of a target data frame differs from the Hash value of the corresponding source data frame, the method further comprises recursively i) generating a sub-source map for the source database, wherein the sub-source map is indicative of a structuring of the time-dependent data values of the source data frame into sub-source data frames, ii) generating a sub-target map for the target database, wherein the sub-target map is indicative of a structuring of the time-dependent data values of the corresponding target data frame into sub-target data frames, wherein the sub-source map corresponds to the sub-target map, iii) determining for the sub-source data frames and for the sub-target data frames a sub-Hash value, wherein the sub-Hash value is sensitive to the time-dependent data values associated with the respective sub-data frame, and iv) determining one or more sub-data frames comprising different time-dependent data values by comparing the sub-Hash value of the sub-target data frames with the sub-Hash value of the corresponding sub-source data frame, wherein the recursion is performed until the one or more time-dependent data values causing the respective difference between the Hash values of the target data frame and the source data frame can be identified.

In particular, the recursive generating of sub-source maps, sub-target maps, determining of sub-Hash values and comparing of the sub-Hash values refers to a subsequent and concurrent repetition of the method as defined above, wherein as basis for the generation of the respective sub-maps a part of the target database and the source database is utilized for which in a previous step of the recursion a desynchronized state has been determined. In particular, in a recursive method as described above, a sub-data frame for which a desynchronization has been determined can form the basis of the next recursion level for generating a respective sub-sub map for the sub-data frame. In order to avoid terminology problems in the following, the addition "sub" is always used to indicate that the respective feature is utilized in any one of the lower recursion levels following the first determination of the data synchronization state. However, generally, the recursion can comprise an arbitrary number of repetitions until the abortion criterion is met. In particular, the abortion criterion refers to allowing to identify the respective time-dependent data values that cause the desynchronization of the databases. For example, if in one of the sub-steps of the recursion, data frames have been identified that are desynchronized, wherein the data frames are associated with a number of time-dependent data values that lies below a predetermined threshold, the recursion can be aborted. The threshold can be determined, for instance, based on the knowledge that for this respective number of time-dependent data values a fast single value comparison can be performed that allows to directly identify the time-dependent data values causing the respective difference. However, in some embodiments the recursion can also be performed until only one time-dependent data value is associated with a data frame, wherein in this case the last recursion step refers to a direct comparison of the time-dependent data values.

In an embodiment, the method further comprises updating the target database with the identified time-dependent data values such that the target database and the source database are in a synchronized state.

In an embodiment, the source map and the target map, respectively, refer to a key value map, respectively, providing a mapping between a) a storage position of the corresponding data frames on the source database and the target database, respectively, and b) the respective Hash values of the corresponding data frames. Preferably, the comparing of the Hash values of the target data frames with the Hash values of the corresponding source data frames is based on the key value mapping of the source map and the target map, respectively.

In a further aspect of the invention, a computational framework for determining a data synchronization state between a source database and a target database is presented, wherein the target database is configured to store a copy of historical time-series data sets stored at the source database of an industrial plant, wherein a respective time-series data set is associated with a respective tag and comprises a respective series of time-dependent data values, wherein the framework comprises i) a source map providing unit for providing a source map for the source database, wherein the source map is indicative of a structuring of at least some of the time-dependent data values stored on the source database into a plurality of source data frames, wherein the time-dependent data values associated with a data frame are defined by a) a respective tag associated with a respective time-series data set, and b) a respective start time and a respective end time of the time-dependent data values of the respective time-series data set associated with the respective tag, ii) a target map providing unit for providing a target map for the target database, wherein the target map is indicative of a structuring of at least some of the time-dependent data values stored at the target database into a plurality of target data frames, wherein the target map corresponds to the source map such that the structuring of the target database corresponds to the structuring of the source database such that the source data frames correspond to the target data frames, respectively, iii) a Hash value determining unit for determining for the source data frames and for the target data frames a Hash value, wherein the Hash value is sensitive to the time-dependent data values associated with the respective data frame, and iv) a synchronization state determining unit for determining the data synchronization state by comparing the Hash value of a target data frame with the Hash value of the corresponding source data frame.

In a further aspect of the invention, a database system is presented, wherein the system comprises i) a source database provided at an industrial plant and configured to store time-series data sets of the industrial plant, ii) a target database configured to store a copy of the historical time-series data sets stored at the source database of the industrial plant, and iii) a computational framework as described above.

In a further aspect of the invention, a computer program product for determining a data synchronization state between a source database and a target database is presented, wherein the computer program product comprises program code means causing a computational framework as described above to execute a method as described above.

It shall be understood that the method as described above, the computational framework as described above, the database system as described above and the computer program product as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the present invention will be apparent from and elucidated with reference to the embodiments described hereinafter.

### BRIEF DESCRIPTION OF THE DRAWINGS

In the following drawings:
- Fig. 1: shows schematically and exemplarily an embodiment of a database system comprising a computational framework for determining a data synchronization state between a source database and a target database,
- Fig. 2: shows a flowchart exemplarily illustrating an embodiment of a method for determining a data synchronization state between a source database and a target database, and
- Fig. 3: shows schematically and exemplarily general principles of an embodiment of the method for determining a data synchronization state between a target database and a source database.

### DETAILED DESCRIPTION OF EMBODIMENTS

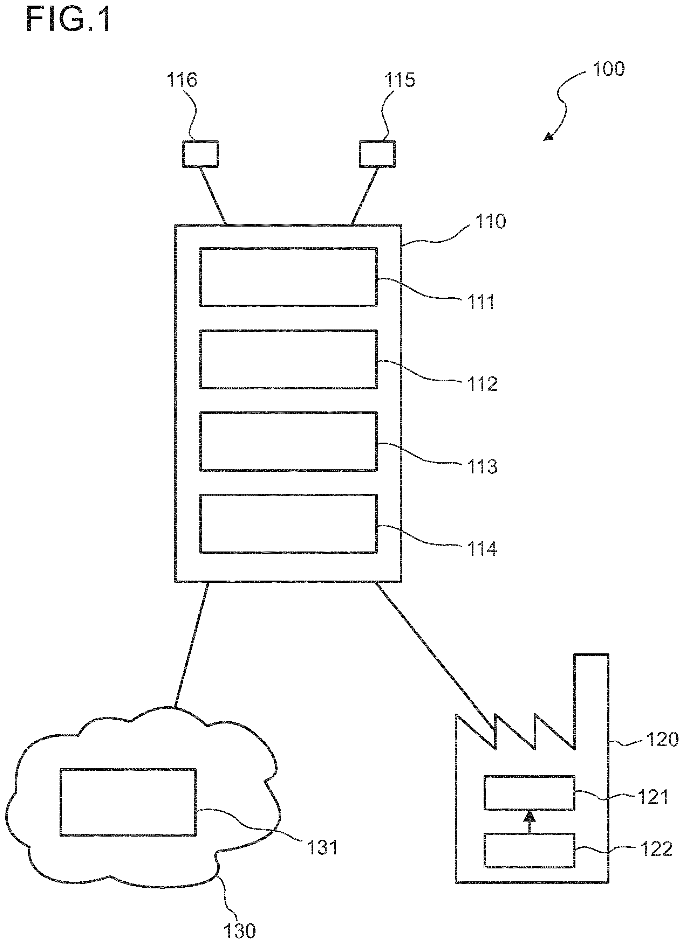

Fig. 1 shows schematically and exemplarily a database system 100 comprising a source database 121 provided at an industrial plant 120, a target database 131 provided at an arbitrary location, for instance, in a cloud 130 and a computational framework 110 for determining a data synchronization state between the source database 121 and the target database 131.

The source database 121 is provided at an industrial plant 120 and is configured to store time-series data sets of the industrial plant 120. Generally, the industrial plant 120 can refer to any technical infrastructure that is used for an industrial purpose. An industrial purpose may be manufacturing or processing of one or more industrial products, i.e., a manufacturing process or a processing performed by the industrial plant. For example, the industrial purpose can refer to the production of a product. The product can, for example, be any physical product such as a chemical, a biological, a pharmaceutical, a food, a beverage, a textile, a metal, a plastic, or a semiconductor. Additionally or alternatively, the product can even be a service product such as an electricity, heating, air conditioning, waste treatment such as recycling, chemical treatment such as breakdown or dissolution, or even incineration, etc. Accordingly, the industrial plant 120 may be one or more of a chemical plant, a process plant, a pharmaceutical plant, a fossil fuel processing facility such as an oil and/or natural gas valve, a refinery, a petrochemical plant, a cracking plant, and the like. The industrial plant 120 can even be any of a distillery, an incinerator, or a power plant. The industrial plant 120 can even be a combination of any of the examples given above.

For performing a production process, the industrial plant 120 comprises a technical infrastructure which can be controlled by control parameters implemented, for instance, by a process control system 122 into the technical infrastructure. The technical infrastructure may comprise equipment or process units such as any one or more of a heat exchanger, a column such as a fractionating column, a furnace, a reaction chamber, a cracking unit, a storage tank, a precipitator, a pipeline, a stack, a filter, a valve, an actuator, a transformer, a circuit breaker, a machinery, e.g., a heavy duty rotating equipment such as a turbine, a generator, a pulveriser, a compressor, a fan, a pump, a motor, etc. Moreover, the industrial plant 120 typically comprises a plurality of sensors that allow to measure operational parameters of the technical infrastructure. The measured operational parameters can then be stored by the process control system 122 on the source database 121 which can also be regarded as a process database system of the industrial plant 120. Further, the operational parameters can also be utilized by the process control system 122 for controlling the production process in the industrial plant 120. The operational parameters measured by the sensors may relate to various process parameters and/or parameters related to the equipment or the process units. For example, sensors may be used for measuring a process parameter such as a flow rate within a pipeline, a fluid level in a tank, a temperature of a furnace, a chemical composition of a gas, etc., and some sensors can be used for measuring vibrations of a turbine, a speed of a fan, an opening of a valve, a corrosion of a pipeline, a voltage across a transformer, etc. The difference between the sensors cannot only be based on the parameter that they sense but can also be based on the sensing principle that the respective sensors use. Some examples of sensors based on the parameter that they sense may comprise: temperature sensors, pressure sensors, radiation sensors such as light sensors, flow sensors, vibration sensors, displacement sensors and chemical sensors such as those for detecting a specific matter such as a gas. Examples of sensors that differ in terms of the sensing principle that they employ may, for example, be: piezoelectric sensors, piezoresistive sensors, thermocouples, impedance sensors such as capacitive sensors and resistive sensors, and so forth. The sensors generally measure operational parameters in form of time-dependent data values, i.e. data values that are associated with the specific time at which they have been measured by the sensor. It is common to store these time-dependent data values measured by a sensor in form of a time-series data set on the source database 121.

The source database 121 can refer, for instance, to a storage comprising dedicated hardware and/or software for storing time-series data sets. However, the source database 121 can also refer to a general storage or to any other computing system that, *inter alia,* allows a storage of time-series data sets. Each time-series data set stored on the source database 121 is associated with a tag which can be regarded as an identifier not only of the respective time-series data set but optionally also of one or more sensors from which the time-dependent data values of the respective time-series data set have been measured. Moreover, each respective time-series data set associated with the respective tag comprises the time-dependent data values stored together with timestamps indicating the time at which a respective time-dependent data value has been measured. Optionally, the respective time-series data set can also comprise a quality value for each respective time-dependent data value indicating a quality of the measurement of the respective time-dependent data value. Thus, a source database 121 stores, preferably for each sensor of the industrial plant 120, a respective time-series data set which is continuously updated each time a new time-dependent data value is measured by the respective sensor.

Generally, the industrial plant 120 can be integrated into an enterprise control system for managing and controlling the production performed by the industrial plant 120. For managing and controlling of the industrial plant 120, it is often desirable to retrieve measurement data provided by the sensors from the source database 121 and to store the retrieved measurement data on a target database 131. In particular, the target database 131 can be chosen such that it allows a further processing of the measurement data, i.e. the time-series data sets, by other dedicated and more complex management and controlling systems like an enterprise control system. In particular, in many real applications, the computational framework managing, controlling and retrieving of the time-series data sets on the source database 121 refer to legacy systems that are not adapted for more complex processing and analysing of the respective data. Thus, regularly or continuously copying the time-series data sets stored on the source database 121 to a target database 131 that is adapted to not only allow, but preferably support, the access of more complex data analysis and management tools, for instance, of artificial intelligence based management tools or big data analysis algorithms, allows a further advantageous processing of the time-series data sets provided by the industrial plant 120. For example, the target database 131 can be provided in a cloud-based environment that allows access from a plurality of places, computers, or workspaces. However, for further utilizing and processing the copied time-series data sets on the target database 131, it is advantageous if it can be ensured that the copied time-series data sets are the same as the originally stored time-series data sets on the source database 121, i.e. it would be advantageous to know the data synchronization state between the target database 131 and the source database 121.

Thus, the database system 100 comprises a computational framework 110 for determining a data synchronization state between the source database 121 and the target database 131. The computational framework 110 comprises a source map providing unit 111, a target map providing unit 112, a Hash value determining unit 113 and a synchronization state determining unit 114. Optionally, the computational framework 110 can further comprise an input unit 115 that allows a user to access the computational framework 110 and provide input to the computational framework 110, like a keyboard, a touch screen, a computer mouse, a microphone, etc. Moreover, the computational framework 110 can also comprise an output unit 116 for providing an output to a user, for instance, on a display, a light unit, a speaker, etc.

The source map providing unit 111 is adapted to provide a source map for the source database 121. The source map is indicative of a structuring of at least some of the time-dependent data values stored on the source database 121 into a plurality of source data frames. Generally, a data frame can be defined by the time-dependent data values associated with the data frame. The time-dependent data values can be defined generally, by a) a respective tag associated with the respective time-dependent data set of the time-dependent data value and b) a respective time frame, for instance, a start time and an end time, of the time-dependent data values of the respective time-series data set associated with the respective tag. Thus, also the data frame can be defined by the tags and time frames of the time-dependent data values associated with the data frame. The source map can then, for instance, be adapted to comprise a mapping of the time-dependent data values to a respective data frame, wherein the mapping can be indicated by referring to the tags and the respective time frames of the respective time-dependent data values. Thus, the structuring of the source database 121 into a plurality of data frames can also be regarded as a form of grouping of the time-dependent data values stored on the source database 121. In particular, in this view, a group of time-dependent data values refers to a data frame and the members of a respective group of time-dependent data values are associated with the same data frame. Preferably, a general data frame is associated with time-dependent data values of different respective time-series data sets defined by different respective tags and the same respective start time and respective end time. Even more preferably, the different tags refer to subsequent tags.

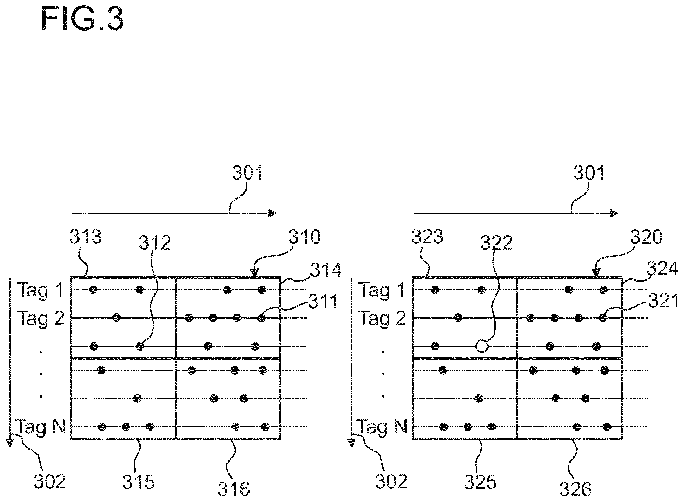

A schematic and exemplary illustration of this principle is provided in Fig. 3. In Fig. 3, the time-dependent data values, like the time-dependent data value 311, are stored on the source database shown as schematic diagram representation 310. The representation 310 of the source database 121 shows the time-dependent data values stored on the source database 121 in form of a two-dimensional diagram, wherein the first dimension 301 refers to a timeline indicating the time associated with the respective time-dependent data value and the second dimension 302 refers to the tag with which the respective time-dependent data value is associated. Although generally the tags can refer to any arbitrary number or other indicator, in this example the tags are sequentially numbered starting from 1 subsequently to some tag number represented by N. In this representation 310 of the source database 121, the time-dependent data values are structured into four data frames 313, 314, 315, 316. In this view, it is clearly accessible that a data frame can be defined easily by the tags associated with the data frame and the respective time interval associated with the data frame, wherein the time interval can be provided in form of a start time and an end time. In this way, the time-dependent data values of the time-series data sets that are associated with a respective data frame 313, 314, 315, 316 are clearly defined.

The target map providing unit 112 is adapted to provide a target map forthe target database 131 applying the same principles described above with respect to the source map. In particular, the target map is provided such that the structuring of the target database 131 corresponds to the structuring of the source database 121 such that the source data frames correspond to the target data frames, respectively. Or, defined in another way, the time-dependent data values that are stored on the target database 131 and the source database 121 are grouped into data frames such that always the same time-dependent data values are grouped into a respective source data frame and target data frame. Accordingly, when this kind of structuring is utilized, in a synchronized state, each target data frame is defined by the same time-series data values as the corresponding source data frame, respectively.

This general principle of the invention is also further illustrated in Fig. 3 when comparing the representation 310 of the source database 121 with the representation 320 of the target database 131 which shows that each source data frame 313, 314, 315, 316 comprises a corresponding target data frame 323, 324, 325, 326 which comprises the same time-dependent data values if the source database 121 and the target database 131 are in a synchronized state. For example, the time-dependent data value 311 associated with source data frame 314 is the same as the time-dependent data value 321 associated with the target data frame 324.

The Hash value determining unit 113 is adapted to determine a Hash value forthe source data frames and for the target data frames, in particular, for all source data frames and target data frames. However, the Hash value determining unit 123 can also be adapted to only determine a Hash value for a part of the target data frames and the source data frames or only for specific source data frames and target data frames. Generally, the Hash value is determined by the Hash value determining unit 113 for corresponding source data frames and target data frames. The Hash value is determined such that it is sensitive to the time-dependent data values associated with the respective data frame. Generally, a Hash value is determined by applying a Hash function to one or more data values. For example, a Hash function can be applied to all time-dependent data values of a respective data frame, wherein the applied Hash function maps the time-dependent data values to one or more Hash values. In a preferred embodiment, the Hash value determining unit 113 is adapted to first apply a Hash function to each time-dependent data value, its associated timestamp, and optionally its quality value of a data frame such that for each time-dependent data value of the data frame an individual Hash value is determined. In a next step, the Hash value determining unit 113 is then preferably adapted to apply a further mapping function, for instance, a further Hash function or preferably a Merkle tree, to all individual Hash values of a data frame to determine an overall Hash value for the respective data frame. The overall Hash value is then regarded as the Hash value for the respective data frame. Applying a Hash function has the effect that the amount of data that has to be compared for identifying a data synchronization state can be highly reduced.

The synchronization state determining unit 114 is adapted to determine the data synchronization state of the source database 121 and the target database 131 by comparing the Hash value of a target data frame with the Hash value of the corresponding source data frame, in particular, by comparing the Hash value of each target data frame with the Hash value of each corresponding source data frame for which a Hash value has been determined. Since the Hash values are sensitive to the time-dependent data values, equal Hash values indicate that the respective data frames to which the Hash values belong comprise the same time-dependent data values and are thus synchronized. On the other hand, differing Hash values indicate a difference in the time-dependent data values between the respective data frames and thus are indicative of a desynchronized state of the source database 121 and the target database 131. An example for differing time-dependent data values is also provided in Fig. 3. In particular, the source data frame 313 of the source database representation 310 comprises the time-dependent data value 312, whereas corresponding target data frame 323 is missing this time-dependent data value, as indicated by reference 322. Accordingly, it is expected that the Hash values of these two data frames differ.

For determining a synchronization of the source database 121 and the target database 131, the synchronization state determining unit 114 can be adapted to apply the above principles to the complete database, i.e. to all time-dependent data values, however, the synchronization state determining unit 114 can also be adapted to only determine the data synchronization state of a part of the database, wherein in this case the principles as described above are only applied to this part of the database. Generally, the data synchronization state can refer to information indicating whether the source database and the target database or a part of the source database and the target database are synchronized or not. However, the data synchronization state can also indicate a level of synchronization. For example, it can be indicative of the amount of differing time-dependent data values and thus can provide a measure for the quality of the copy process between the source database and the target database. Accordingly, the data synchronization state can, for instance, be provided to a user utilizing the output unit 116 to inform the user about the data synchronization state. However, the data synchronization state can also be only utilized as internal information, for instance, in order to determine if the target database has to be synchronized with the source database.

In a preferred embodiment, when the synchronization state determination unit 114 determines a differing Hash value for a target data frame and a source data frame and thus a data desynchronization state, the computational framework 110 can be adapted to apply the same principles as described above again on the respective identified data frames as parts of the databases. In particular, it is preferred that the principles are applied in a recursive manner. For example, the respective identified data frame can then be regarded as part of the databases and for the source data frame again a source map, which can in this case be regarded as a sub-source map, can be generated with respect to the principles as described above. Further, also for the target database and the respective target data frame a target map can again be generated, which in this case can be regarded as referring to a sub-target map, again with respect to the above described principles. In particular, the sub-source map again corresponds to the sub-target map for the respective data frames. The data frames defined by the sub-target map and the sub-source map can then be regarded as sub-data frames. Again, also as described above, for instance, the Hash value determining unit 113 can be adapted to determine Hash values for the respective sub-target data frames and sub-source data frames. These Hash values can then be regarded as sub-Hash values. The synchronization state determining unit 114 can then again be adapted to compare the sub-Hash values of respective corresponding sub-data frames.

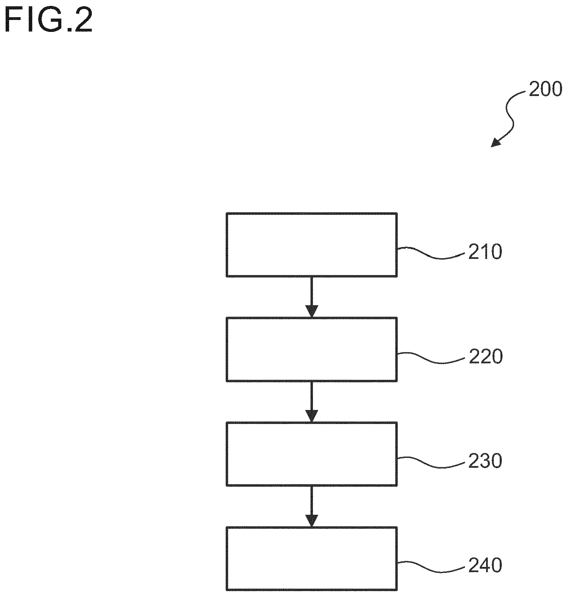

Fig. 2 shows schematically and exemplarily a flowchart of a method for determining a data synchronization state between a source database and a target database. In particular, the method 200 follows the principles already described above and can, for instance, be performed by the system described with respect to Fig. 1. In particular, the method 200 comprises a step 210 of providing a source map for the source database. The source map is indicative of structuring of at least some of the time-dependent data values stored at the source database into a plurality of source data frames, as already described above. In particular, the time-dependent data values associated with the data frame are defined by a respective tag associated with a respective time-series data set and a respective start time and a respective end time of the time-dependent data values of the respective time-series data set associated with the respective tag. Further, the method 200 comprises a step 220 of providing a target map for the target database. The target map is indicative of a structuring of at least some of the time-dependent data values stored at the target database into a plurality of target data frames. As also already described above in detail with respect to Fig. 1, the target map corresponds to the source map such that the structuring of the target database corresponds to the structuring of the source database. Thus, the source data frames correspond to the target data frames, respectively. Generally, the steps 210 and 220 of providing a target map and providing a source map, respectively, can be performed in an arbitrary sequence, for instance, instead of first providing the source map also first a target map can be provided. Moreover, the source map and the target map can also be provided at the same time, or even be generated at the same time as long as the above defined conditions are fulfilled. In the following step 230, the method 200 comprises determining for the source data frames and for the target data frames a Hash value, wherein the Hash value is sensitive to the time-dependent data values associated with the respective data frame. Moreover, in step 240 of method 200 the data synchronization state is determined by comparing the Hash value of a target data frame with the Hash value of the corresponding source data frame.

Further, optionally, when it has been determined that at least one Hash value of a target data frame differs from the Hash value of the corresponding source data frame, the method 200 can optionally comprise recursively repeating the steps 210 to 240 with a determined target data frame and source data frame as basis. In particular, in this case the providing of the source map and the target map can be referred to as the providing of a sub-source map and a sub-target map for the respective data frame. Moreover, the determining of the Hash values in this case can also then be referred to as the determining of sub-Hash values and the determining of the data synchronization state by comparing the sub-Hash values allows then to further determine which time-dependent data value causes a difference between the target database and the source database. In particular, the recursion as defined above can be performed until the one or more time-dependent data values causing the difference between the target database and the source database have been identified.

In the following, a more detailed embodiment of the above described invention will be described. In this embodiment, a Hash function hash_vqt(v, q, time) that maps the data-triple optionally associated with each time-dependent data value, for instance, the time, quality and data value itself, to a pseudo-unique hash value. This function can, for instance, be implemented by computing a string Hash of a serialized data-triple object based on the data values optionally associated with the time-dependent data value. Further, a Hash function hash_tag(tagid, starttime, endtime) can be defined that generally maps values defined by a tag identifier, a start time and an end time to a pseudo-unique hash value. For example, this function can internally use a function like hash_vqt defined above and a Merkle tree to compute the overall Hash value. Moreover, if it is assumed that more than one tag should be implemented, in particular, if a Hash value should be determined for multiple tags, also a function hash_block(tagset, starttime, endtime) can be defined that maps values defined by a set of tags, a start time and an end time to a pseudo-unique Hash value. For example, this function can internally use the function hash_tag as defined above and a Merkle tree to compute an overall block Hash value.

Based on these functions an embodiment of the above defined computer-implemented method can be provided. In particular, in a first step the source and target maps can be generated or provided. Based on the source and target map the source and target data frames can be identified, for instance, by "splitting" the source and target databases into data blocks, i.e. into groups of time-dependent data values each defined by a data frame. Preferably, the data blocks have a size, i.e. comprise an amount of data, that allows to utilize sufficiently small database queries for processing the time-dependent data values on both databases. In particular, restrictions to the size of the data blocks, and thus the data frames, with respect to the processing of the data by a potential legacy source database can be taken into account. Then the hash_block function defined above can be used to determine a Hash value for each data frame of the source and target database. If a comparison of the Hash values of corresponding target and source data frames indicated a difference in the data values associated with the respective data frames, the respective data frames can be subdivided in smaller data blocks, for example based on respective sub-maps. The above described algorithm can then be recursively performed with the subdivided data blocks until the time-dependent data value causing the mismatch is identified. If during the comparison of the Hash values of the data frames no Hash differences can be found, the parts of the databases for which the Hash values have been compared are fully synchronized.

In practice, when starting to subdivide the data blocks recursively to find the root cause of a data block Hash mismatch, there will be a tipping point at which it is easier to directly compare the time-dependent data values and optionally the data associated with the time-dependent data values stored on the source and target database, instead of performing a further recursion. Thus, it is preferred to predetermine the number of time-dependent data values for this tipping point, for example, during a test run of the algorithm, as recursion threshold and to implement this recursion threshold as abort criteria for the recursion.

There are multiple strategies to compute an optimal data frame structuring of the respective database, i.e. to generate an optimal source and target map. For example, it is preferred that a compromise is found between a query count, i.e. an amount of data retrieved during a query for retrieving time-dependent data values associated with a data frame, database resource consumption and speed. Preferably, for this optimization a data density, i.e. count of data points in a database per time unit, of respective tags is tracked in this case.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of the source map, the providing of the target map, the determining of the Hash value, or the comparing of the Hash values, etc., performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to a method for determining a synchronization state between a source database and a target database. A data set is associated with a tag and comprises a series of data values. In a step a source map being indicative of a structuring of the values stored at the source database into data frames is provided, wherein the values associated with a frame are defined by a tag associated with a data set. In a step a target map for the target database is provided, wherein the target map corresponds to the source map. For the data frames a Hash value is determined in a step, wherein the Hash value is sensitive to the data values associated with the respective data frame, and in a step the data synchronization state is determined by comparing the Hash values.

## Claims

1. A computer implemented method (200) for determining a data synchronization state between a source database (121) and a target database (131), wherein the target database (131) is configured to store a copy of historical time-series data sets stored at the source database (121) of an industrial plant (120), wherein a respective time-series data set is associated with a respective tag and comprises a respective series of time-dependent data values, wherein the method (200) comprises:
- providing (210) a source map forthe source database (121), wherein the source map is indicative of a structuring of at least some of the time-dependent data values stored at the source database (121) into a plurality of source data frames (313, 314, 315, 316), wherein the time-dependent data values associated with a data frame are defined by a) a respective tag associated with a respective time-series data set, and b) a respective start time and a respective end time of the time-dependent data values of the respective time-series data set associated with the respective tag,
- providing (220) a target map for the target database (131), wherein the target map is indicative of a structuring of at least some of the time-dependent data values stored at the target database (131) into a plurality of target data frames (323, 324, 325, 326), wherein the target map corresponds to the source map such that the structuring of the target database (131) corresponds to the structuring of the source database (121) such that the source data frames (313, 314, 315, 316) correspond to the target data frames (323, 324, 325, 326), respectively,
- determining (230) for the source data frames (313, 314, 315, 316) and for the target data frames (323, 324, 325, 326) a Hash value, wherein the Hash value is sensitive to the time-dependent data values associated with the respective data frame, and
- determining (240) the data synchronization state by comparing the Hash value of a target data frame (323, 324, 325, 326) with the Hash value of the corresponding source data frame (313, 314, 315, 316).

2. The method (200) in accordance with claim 1, wherein a data frame is associated with time-dependent data values of different respective time-series data sets defined by a) different respective tags and b) the same respective start time and respective end time.

3. The method (200) according to any of claims 1 and 2, wherein the structuring of the target database (131) corresponds to the structuring of the source database (121) when in a synchronized state each target data frame (323, 324, 325, 326) is defined by the same time-series data values as the corresponding source data frame (313, 314, 315, 316), respectively.

4. The method (200) according to any of the preceding claims, wherein the Hash value is determined based on a predefined Hash function.

5. The method (200) according to any of the preceding claims, wherein the Hash value refers to an overall Hash value and is determined based on individual Hash values determined for each respective time-dependent data value of a data frame.

6. The method (200) according to claim 5, wherein the overall Hash value is determined based on the individual Hash values utilizing a Merkle tree.

7. The method (200) according to any of claims 5 and 6, wherein an individual Hash value is determined based on a time, value and/or quality associated with the time-dependent data value.

8. The method (200) according to any of preceding claims, wherein, if during the determining of the data synchronization state, it is determined that at least one Hash value of a target data frame (323) differs from the Hash value of the corresponding source data frame (313), the method (200) further comprises recursively:
- generating a sub-source map forthe source database (121), wherein the sub-source map is indicative of a structuring of the time-dependent data values of the source data frame (313) into sub-source data frames,
- generating a sub-target map for the target database (131), wherein the sub-target map is indicative of a structuring of the time-dependent data values of the corresponding target data frame (323) into sub-target data frames, wherein the sub-source map corresponds to the sub-target map,
- determining forthe sub-source data frames and forthe sub-target data frames a sub-Hash value, wherein the sub-Hash value is sensitive to the time-dependent data values associated with the respective sub-data frame, and
- determining one or more sub-data frames comprising different time-dependent data values by comparing the sub-Hash value of the sub-target data frames with the sub-Hash value of the corresponding sub-source data frame,
wherein the recursion is performed until the one or more time-dependent data values causing the respective difference between the Hash values of the target data frame (323) and the source data frame (313) can be identified.

9. The method (200) according to claim 8, wherein the method (200) further comprises updating the target database (131) with the identified time-dependent data values such that the target database (131) and the source database (121) are in a synchronized state.

10. The method (200) according to any of preceding claims, wherein the source map and the target map, respectively, refer to a key value map, respectively, providing a mapping between a) a storage position of the corresponding data frames on the source database (121) and the target database (131), respectively, and b) the respective Hash values of the corresponding data frames.

11. The method (200) according to claim 10, wherein the comparing of the Hash values of the target data frames (323, 324, 325, 326) with the Hash values of the corresponding source data frames (313, 314, 315, 316) is based on the key value mapping of the source map and the target map, respectively.

12. A computational framework (110) for determining a data synchronization state between a source database (121) and a target database (131), wherein the target database (131) is configured to store a copy of historical time-series data sets stored at the source database (121) of an industrial plant (120), wherein a respective time-series data set is associated with a respective tag and comprises a respective series of time-dependent data values, wherein the framework (110) comprises:
- a source map providing unit (111) for providing a source map forthe source database (121), wherein the source map is indicative of a structuring of at least some of the time-dependent data values stored on the source database (121) into a plurality of source data frames (313, 314, 315, 316), wherein the time-dependent data values associated with a data frame are defined by a) a respective tag associated with a respective time-series data set, and b) a respective start time and a respective end time of the time-dependent data values of the respective time-series data set associated with the respective tag,
- a target map providing unit (112) for providing a target map for the target database (131), wherein the target map is indicative of a structuring of at least some of the time-dependent data values stored at the target database (131) into a plurality of target data frames (323, 324, 325, 326), wherein the target map corresponds to the source map such that the structuring of the target database (131) corresponds to the structuring of the source database (121) such that the source data frames (313, 314, 315, 316) correspond to the target data frames (323, 324, 325, 326), respectively,
- a Hash value determining unit (113) for determining for the source data frames (313, 314, 315, 316) and for the target data frames (323, 324, 325, 326) a Hash value, wherein the Hash value is sensitive to the time-dependent data values associated with the respective data frame, and
- a synchronization state determining unit (114) for determining the data synchronization state by comparing the Hash value of a target data frame (323, 324, 325, 326) with the Hash value of the corresponding source data frame (313, 314, 315, 316).

13. A database system comprising:
- a source database (121) provided at an industrial plant (120) and configured to store time-series data sets of the industrial plant (120),
- a target database (131) configured to store a copy of the historical time-series data sets stored at the source database (121) of the industrial plant (120), and
- a computational framework (110) according to claim 12.

14. A computer program product for determining a data synchronization state between a source database (121) and a target database (131), wherein the computer program product comprises program code means causing a computational framework (110) according to claim 12 to execute a method according to any of claims 1 to 11.
